# EUROPEAN PATENT APPLICATION

(11) **EP 4 579 544 A1**
(43) Date of publication of application: **02.07.2025**
(21) Application number: 24219294.6
(22) Date of filing: 12.12.2024
(51) Int. Cl.: G06Q 10/02, G06Q 10/0631, G06Q 50/40

(54) **APPARATUS FOR TRANSMITTING ADDITIONAL INFORMATION ON AVDS RESERVATION AND METHOD THEREFOR**

(30) Priority: 27.12.2023 KR 20230193146; 27.06.2024 KR 20240084402
(71) Applicant: Hyundai Mobis Co., Ltd., Gangnam-gu Seoul 06141 (KR)
(72) Inventor: LEE, Jae Yong, 16891 Yongin-si, Gyeonggi-do (KR)
(74) Representative: Jung, Minkyu

(57) **Abstract**

An apparatus including a transceiver, one or more processors configured to execute instructions and to control the transceiver to transmit or receive information on an Automated Valet Driving System (AVDS) reservation, and a memory storing the instructions, and an execution of the instructions configures the one or more processors to transmit, by the transceiver, an AVDS reservation request to a server, receive AVDS reservation information from the server, the AVDS reservation information being determined based on the AVDS reservation request, transmit reservation confirmation information for the AVDS reservation information to the server, and transmit an additional request related to the AVDS reservation request to the server.

## Description

### BACKGROUND

### 1. Field

The present disclosure relates to an apparatus or method for automated valet driving, and more particularly, to an apparatus for transmitting additional information on an Automated Valet Driving System (AVDS) reservation and method therefor.

### 2. Description of the Related Art

An AVDS consists of a user, a system, and an autonomous vehicle. The AVDS may perform automated valet driving control using an automated driving function.

It is possible to request or reserve additional services while delegating authority to automated valet driving control by AVDS.

The present disclosure is to propose a scheme for transmitting additional information on an AVDS reservation.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, here is provided an apparatus including a transceiver, one or more processors configured to execute instructions and to control the transceiver to transmit or receive information on an Automated Valet Driving System (AVDS) reservation, and a memory storing the instructions, and an execution of the instructions configures the one or more processors to transmit, by the transceiver, an AVDS reservation request to a server, receive AVDS reservation information from the server, the AVDS reservation information being determined based on the AVDS reservation request, transmit reservation confirmation information for the AVDS reservation information to the server, and transmit an additional request related to the AVDS reservation request to the server.

The transmitting the additional request may include sequentially transmitting the additional request to a local server and an additional server providing an additional service, the additional service being a service indicated by the additional request after being transmitted to the server.

A response to the additional request may be determined by the local server.

The processor may be configured to control a handover request to be transmitted to the server to hand over a control authority of a vehicle associated with the AVDS to the AVDS.

The additional request may be transmitted to the server after a control authority for the vehicle is handed over to the AVDS.

The additional request may be transmitted before a pickup time after a service according to the AVDS reservation being completed.

The additional request may include includes one or more of a change or an addition of information related to the AVDS reservation included in the reservation confirmation information, a change of information related to a service of the AVDS reservation included in the reservation confirmation information, and information on an additional service.

The additional request may be configured to indicate a change of a service of the AVDS reservation included in the reservation confirmation information.

The additional request may indicate one or more of the AVDS reservation included in the reservation confirmation information, a service of the AVDS reservation included in the reservation confirmation information, and an additional service.

The additional request may indicate one of a request for a change or an addition of details of the AVDS reservation included in the reservation confirmation information and a cancellation of the AVDS reservation included in the reservation confirmation information.

The additional request may indicate one or more of a request for a change of the service of the AVDS reservation included in the reservation confirmation information, a change of details of the service of the AVDS reservation included in the reservation confirmation information, and a cancellation of the service of the AVDS reservation included in the reservation confirmation information.

The additional request may indicate the additional service and details for the additional service.

In a general aspect, here is provided a processor-implemented method including transmitting an Automated Valet Driving System (AVDS) reservation request to a server, receiving AVDS reservation information determined based on the AVDS reservation request, transmitting reservation confirmation information for the AVDS reservation information to the server, and transmitting an additional request related to the AVDS reservation request to the server.

The additional request may include one or more of a change or addition of information related to the AVDS reservation included in the reservation confirmation information, a change of information related to a service of the AVDS reservation included in the reservation confirmation information, and information on an additional service.

The additional request may be configured to indicate a change of a service of the AVDS reservation included in the reservation confirmation information.

### BRIEF DESCRIPTION OF THE DRAWINGS

FIG. 1 illustrates a basic flow of an Automated Valet Driving System (AVDS);
FIG. 2 illustrates a system structure;
FIG. 3 illustrates a vehicle control device;
FIG. 4 illustrates a structure of a vehicle;
FIG. 5 illustrates a global AVDS server and/or a local AVDS server;
FIG. 6 illustrates a procedure related to an AVDS reservation;
FIG. 7 illustrates a procedure related to an AVDS handover;
FIG. 8 illustrates a procedure related to AVDS additional request transmission;
FIG. 9 illustrates the configuration and function of a system of an AVDS server; and
FIG. 10 is a flowchart related to an AVDS addition request.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

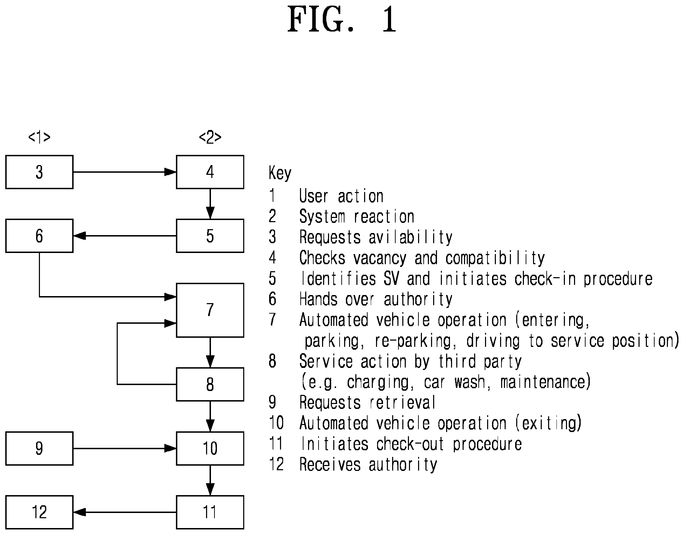

FIG. 1 illustrates a basic flow of an AVDS according to embodiments.

FIG. 1 illustrates a basic flow of an AVDS. The AVDS is extension of a use case of ISO 23374-1 automated valet parking system (AVPS) and an operational design domain (ODD). This system contributes to realization of safe and reliable low-speed Level 4 unmanned driving of a vehicle, and promotes fast and smooth introduction of a future L4 system to a market based on experience gained using the AVDS at low speed in a well-defined ODD.

The AVDS provides a low-speed automatic valet parking service to a vehicle owner. The service is not limited to driverless driving within dedicated parking facilities and allows driverless driving in designated outdoor spaces. Basically, both the AVPS and the AVDS describe a journey from a point A to a point B.

One example use case addressed by the AVDS is valet parking in an airport terminal. The AVPS describes SAE L4 driving in a dedicated parking facility, while the AVDS extends a drop-off area to areas outside the parking facility. After a driver leaves a designated local AVDS drop-off area, the system automatically guides a vehicle on a public road to an entrance to the parking facility and guides the vehicle to an empty parking space or another space as necessary from the entrance. Referring to a space of interest, for example, other use cases addressed by the AVDS may include driving cases at an electric charging station or a car cleaning station or on company premises for logistics purposes.

The AVDS is expected to achieve end-user benefits in terms of saving time, reducing stress, reducing energy consumption of the vehicle, and meet user expectations for a lot of low-speed maneuvering functions. The AVDS provides an automatic charging process for an electric vehicle without requiring a driver to invest time and optimizes utilization of the limited number of charging stations. The AVDS on company premises may reduce labor costs through an unmanned vehicle control system.

To contribute to realization of safe and reliable unmanned AVDS operation, requirements specified in this document are based on performance of state-of-the-art technology available at the time of publication. Therefore, this part will be revised in the future as technology improves.

Embodiments include specific technical solutions for communication interfaces (for example, communication methods and message protocols) due to differences in technologies (for example, spectrum allocation) that are available and commonly used worldwide. Therefore, the embodiments are linked to communication interfaces at national/regional level to ensure interoperability.

The AVDS performs Level 4 autonomous driving of an individual or a plurality of unoccupied vehicles at speeds less than 30 km/h within a defined operating area.

The embodiments designate system frameworks, operational sequences and communication interfaces, performance requirements for operation and management functions, environmental conditions within the operating area, and test procedures to verify performance requirements of the AVDS. The AVDS is considered a use case and ODD extension of ISO 23374-1, including indoor and outdoor applications, which are unmanned operation on company premises, driving on public roads, and outdoor valet parking (for example, from an airport terminal to a parking lot). In addition, the AVDS enables additional services. Further, the AVDS is applied to the cases of driving to electric vehicle charging stations or car washes.

The AVDS includes physically separate subsystems distributed among vehicles, facility equipment, and user domains. Functions of the AVDS are realized by the cooperation of these subsystems, which in most cases are provided by different organizations. The embodiments include a system architecture using subsystems and communication interfaces between subsystems at a logical level.

The AVDS manages system participants (for example, AVDS-compatible vehicles, facilities, and users) and provides necessary interfaces therebetween. The embodiments include requirements for management functions such as verifying compatibility between vehicles and premises, performing remote assistance and recovery when autonomous driving is impossible, and issuing shutdown commands in response to actions of other facility users.

In addition, the AVDS is intended to be used by service providers or facility operators receiving vehicle authorization from individual service recipients.

The embodiments may refer to the following standard documents.

ISO 23374-1, Intelligent transport systems - Automated valet parking systems (AVPS) - Part 1: System framework, requirements for automated driving, and communication interface

ISO 20900, Intelligent transport systems - Partially Automated Parking Systems (PAPS) - Performance Requirements and Test Procedures

ISO 8608 Mechanical vibration - Road surface profiles - Reporting of measured data

ISO 19206-2, Road vehicles - Test devices for target vehicles, vulnerable road users and other objects, for assessment of active safety functions - Part 2: Requirements for pedestrian targets

ISO 19206-4 Road vehicles - Test devices for target vehicles, vulnerable road users and other objects, for assessment of active safety functions - Part 4: Requirements for bicyclist targets.

Definitions of terms according to embodiments are as follows.

Service provider of AVDS: An organization that provides the AVDS to operate unmanned vehicles
User of AVDS: An individual service recipient who transfers/recovers rights (3.3) to/from a service provider through the AVDS
Authority: The right and ability to perform specific tasks in an SV
SV: A vehicle equipped with a vehicle operation subsystem of the AVDS
Premises: Public or private areas where the AVDS is available
Parking facility: A public or private parking lot with AVDS capability
Operation zone: A geographic area within an AVDS-compliant premises where automated driving may be performed
Drop-off area: A location within an operating area where a user leaves the SV and transfers authority to a service provider
Pick-up Area: A location within the operating area where a service provider transfers the SV for user boarding and hands over authority
Parking Spot: A destination within a work area where one vehicle may be parked or temporarily stored
Stopping point: A destination within a work area where the SV stops and remains under certain state conditions, depending on the considered use case
Parking area: An area within an operating area including a plurality of parking spaces
Destination: a location within a work area where the SV is to be transported
Route: A planned traversal of the SV from an origin to a destination
Path: A planned sequence of way points for the SV to follow
Trajectory: A planned route including time information, automated valet parking facility equipment
PFE: Physical equipment installed in parking facilities to support the AVPS, automated valet driving premises equipment
DPE: Physical equipment installed in an operating area of AVDS premises to support the AVDS
Coded marker: A physical or logical marker using a unique ID installed on the AVDS premises detectable by the SV to support localization
Anonymous marker: A physical or logical marker without a unique ID installed on the AVDS premises detectable by the SV to support localization
Designed speed: A situational speed of the SV designed for driving in a given situation (for example, a traffic situation and an environmental condition) as determined by the AVDS
Designed distance: A situational physical distance by design from the SV to other facilities, road users, objects or structures to be maintained by the AVDS in a given situation while performing autonomous driving
Subsystem: A logical level of AVDS component including one or more functions
Function: A function of the AVDS that contributes to processing inputs to the system and converting the inputs into appropriate outputs
(Autonomous driving service) reservation: Basic agreement between the user and the service provider with regard to the operation and management of the SV within a specific premises
(Automatic valet driving) session: An interaction sequence for a given SV between check-in and check-out
(Automatic valet driving) mission: A series of interactions in which the SV is automatically operated by the AVDS from a parking location to a destination for a specific purpose
(Test) scenario: A description of a complete traversal from an origin to a destination to be performed for testing
(Test) scene: A description of a specific event performed for a test, not including an origin or a destination
System operator (SO): A role of an organization that manages vehicle operations in an operation area of the AVDS premises, which includes tasks monitored while being automatically performed or manually performed by individuals from remote locations
Premises (PM): A role of an organization in maintaining a work area in an operable and safe condition in accordance with AVDS requirements
Orchestration system (OS): A system that classifies a session or several connected sessions into a single mission and arranges an executable and optimized sequence of such missions
Value added service system (VA): A role of a service system that provides dedicated service management and a communication interface to the AVDS

Definitions of abbreviations according to embodiments are as follows.

ADS (Automated Driving System), DDT (Dynamic Driving Task), OEDR (Object and Event Detection and Response), ODD (Operational Design Domain), SV (Subject Vehicle), FV (Forward Vehicle), PFE (automated valet Parking Facility Equipment), DPE (automated valet Driving Premises Equipment), VMC (Vehicle Motion Control), DSRC (Dedicated Short Range Communication), VRU (Vulnerable Road User), RO (Remote vehicle Operation (subsystem)), VO (on-board Vehicle Operation (subsystem)), UF (User Frontend (subsystem)), UB (User Backend (subsystem)), VB (Vehicle Backend (subsystem)), OB (Operator Backend (subsystem)), PM (automated valet Parking facility Management (subsystem)), DM (automated valet Driving premises Management (subsystem)), VA (value added service system)
FIG. 1 illustrates a basic flow of the AVDS based on a user action and a system response. FIG. 1 is a representative use case showing a flow in which a user initially transfers authority to a service provider.

In the AVDS, the user may request an additional service (for example, EV charging or car washing) to be performed while authority of the SV remains with the AVDS service provider. The requested service and earliest pickup time may be transferred to a system along with a reservation. While authority is previously with the AVDS service provider, an additional service may be requested depending on the remaining period.

These sessions, which include additional services, include more missions and tasks than those of the AVPS (for example, in the following order: park, wait, charge, park, wait, wash, and park). An orchestration system is in charge of sequencing the requested services and organizing the corresponding mission within a given time. Additional services are treated as additional missions, and the vehicle is driven to a designated location where the service is performed and the vehicle is re-parked at the original parking location or another location. Re-parking automatically occurs after the requested service is completed (for example, charging is completed, and car washing is completed), and there is a parking space available for the next service or re-parking. No user request is required. For each additional service, compatibility of the vehicle and service needs to be checked. This includes geometric (for example, vehicle height, width, length, and charging plug location), electrical (for example, plug type, charging power, and requested charging level) and other specific service characteristics.

Referring to FIG. 1, an AVDS service is provided according to <1> user action and <2> system reaction. An autonomous driving method and apparatus according to embodiments may correspond to a terminal for the user action and/or a system for the system reaction. The autonomous driving method and apparatus according to embodiments may be referred to as an automated valet driving method/device, or a method/device, etc. for brevity.

The method/apparatus according to embodiments receives a request from a user. The method/device according to embodiments checks empty space and compatibility for valet driving. The method/apparatus according to embodiments identifies an SV and activates a check-in process. The method/device according to embodiments receives autonomous driving authority from the user. The method/apparatus according to embodiments performs autonomous vehicle operation. For example, operations according to embodiments may include entering, parking, re-parking, and driving to a service position. The method/apparatus according to embodiments may selectively perform a service action by a third party. For example, there may be charging, car washing, maintenance, etc. The method/apparatus according to embodiments may allow the user to request collection. The method/apparatus according to embodiments may perform autonomous vehicle operations. For example, it is possible to perform exiting. The method/apparatus according to embodiments may activate a check-out procedure. The method/apparatus according to embodiments delivers authority to the user.

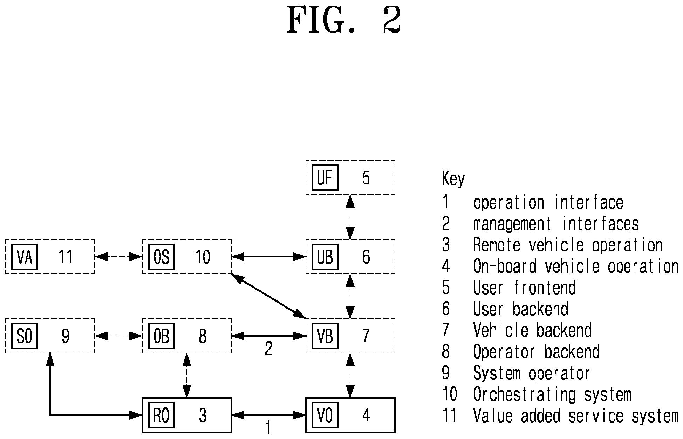

FIG. 2 illustrates a system structure associated with the method/apparatus according to embodiments.

FIG. 2 illustrates a system structure related to a method and apparatus for performing the basic flow of the AVDS of FIG. 1.

FIG. 2 is a logical structure of a subsystem of the AVDS. Implementation of logical subsystems with respect to a physical component may vary depending on the system design. In addition, the subsystem may include a plurality of physical components. For example, a remote vehicle operation subsystem may include a sensor, a control device, and a communication device.

Systems according to embodiments may perform and include methods/apparatus according to embodiments. For example, an AVDS device/system of the method/apparatus according to embodiments may include an operator backend (OB), an orchestrating system (OS), and/or remote vehicle operation (RO). The AVDS device/system according to embodiments may correspond to a server. A user terminal of the method/apparatus according to embodiments may include a user frontend (UF) and/or a user backend (UB). A vehicle of the method/apparatus according to embodiments may include a vehicle backend (VB) and/or on-board vehicle operation (VO). The system of the method/apparatus according to embodiments may further include a service system (value added service system, VA) and/or a system operator (SO). An operation according to embodiments may be performed by each component of the system of FIG. 2. Each component of FIG. 2 may correspond to hardware, software, processor, and/or a combination thereof.

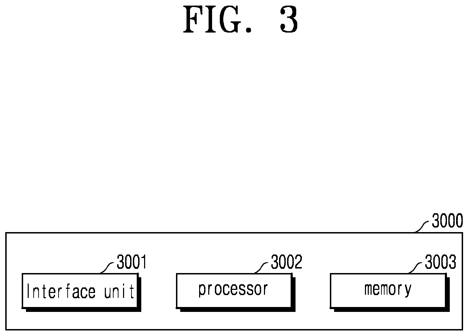

FIG. 3 illustrates a vehicle control device according to embodiments.

The vehicle control device 3000 according to embodiments is a device that controls an operation of a vehicle according to embodiments. The vehicle control device may be referred to as an autonomous driving integrated controller 600. The vehicle control device may include an interface unit 3001, a processor 3002, and a memory 3003.

The memory may store instructions, signaling information, data, etc. for performing operations according to embodiments. The memory may be connected to the interface unit and the processor to transmit and receive necessary signals.

The interface unit may receive signals, information, data, etc. received from the vehicle control device and transmit the signals, information, data, etc. to the memory and/or the processor. In addition, signals, information, data, etc. generated from the memory and/or the processor may be transmitted to the vehicle and/or the driver and/or passengers.

The processor may perform vehicle control operations according to embodiments based on data and/or instructions stored in the memory.

The vehicle control device of FIG. 3 may correspond to a device mounted in a vehicle or a terminal device that controls the vehicle.

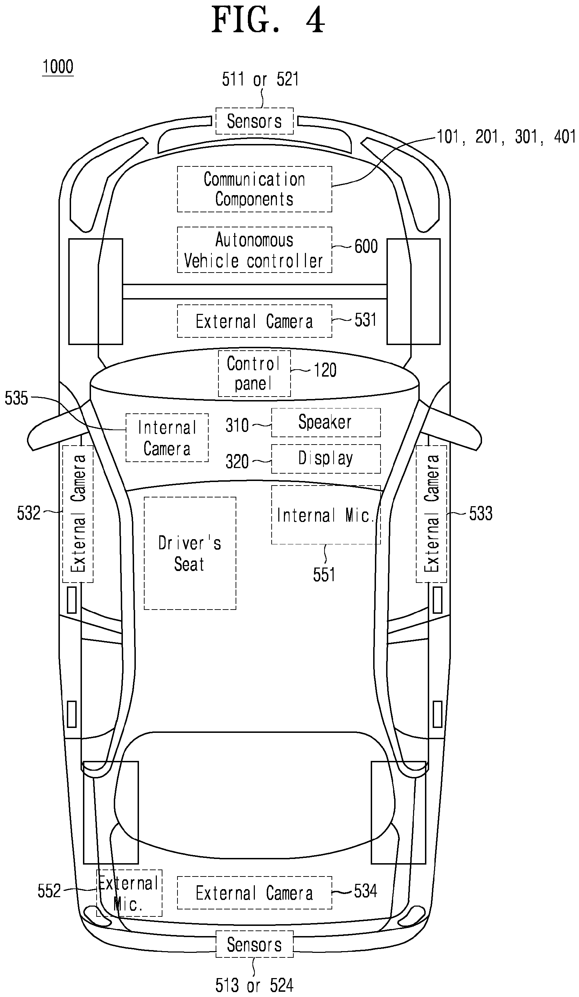

FIG. 4 illustrates a structure of a vehicle according to embodiments.

The vehicle according to embodiments may be configured as illustrated in FIG. 4 and may perform autonomous driving using an autonomous driving control system. The vehicles according to the embodiments may include autonomous vehicles, robots, UAM (Urban Air Mobility), aircraft, autonomous driving devices, and other devices or means of transportation that can be controlled through autonomous driving. The scope of the present disclosure's rights is not limited by these names

An autonomous vehicle 1000 may be implemented around the autonomous driving integrated controller 600 that transmits and receives data required for autonomous driving control of the vehicle through a driving information input interface 101, a traveling information input interface 201, a passenger output interface 301, and a vehicle control output interface 401. However, the autonomous driving integrated controller may be referred to as a controller, a processor, or simply a controller in this specification.

The autonomous driving integrated controller may acquire driving information according to operation of a passenger for a user input unit in an autonomous driving mode or a manual driving mode of the vehicle through the driving information input interface. The user input unit may include a driving mode switch and a control panel 120 (for example, a navigation terminal mounted in the vehicle, a smartphone or a tablet computer carried by the passenger, etc.), and accordingly, the driving information may include driving mode information and navigation information of the vehicle.

In addition, upon determining that a warning is necessary to the driver in the autonomous driving mode or the manual driving mode of the vehicle, the autonomous driving integrated controller may provide warning information to the driver through the passenger output interface along with traveling state information. A speaker 310 and a display device 320 may be included to output such traveling state information and warning information audibly and visually. In this instance, the display device may be implemented as the same device as the control panel described above, or may be implemented as a separate and independent device.

In addition, the autonomous driving integrated controller may transmit control information for driving control of the vehicle to a sub-control system applied to the vehicle through the vehicle control output interface in the autonomous driving mode or the manual driving mode of the vehicle. The sub-control system for driving control of the vehicle may include at least one of a motor control system, an engine control system, a braking control system, or a steering control system, and the autonomous driving integrated controller may transmit at least one of motor control information, engine control information, braking control information, or steering control information as control information to each sub-control system through the vehicle control output interface.

The autonomous driving integrated controller may acquire driving information according to operation of the driver and traveling information indicating a traveling state of the vehicle through the driving information input interface and a traveling information input interface, respectively, and provide traveling state information and warning information generated according to an autonomous driving algorithm through the passenger output interface.

Meanwhile, to ensure stable autonomous driving of the vehicle, the autonomous driving device according to embodiments may include a sensor unit to detect objects around the vehicle, such as surrounding vehicles, pedestrians, roads, or fixed facilities (for example, traffic lights, signposts, traffic signs, construction fences, etc.).

The sensor unit may include one or more of a LiDAR sensor, a radar sensor, and a camera sensor to detect surrounding objects outside the vehicle. It is possible to include a front LiDAR sensor 511, a front radar sensor 521, a rear LiDAR sensor 513, a rear radar sensor 524, a left camera sensor 532, a right camera sensor 533, an internal camera sensor 535, a front camera sensor 531, a rear camera sensor 534, etc. The sensor unit may be connected to microphones 551 and 552.

The embodiments relate to a method of controlling driving of an ADS vehicle to an EV charging station by the AVDS.

The embodiments relate to international standards ISO 23374-1 (AVPS) and ISO 12768-1 (AVDS). The embodiments relate to an automated valet parking system (hereinafter referred to as "AVPS") or an automated valet driving system (hereinafter referred to as "AVDS"). The embodiments provide a method and apparatus in which the ADS vehicle (conceptually the same concept as a standard "SV") is autonomously driven from a parking position to an EV charging station and charged with electricity and returns back to the parking position or is headed to another position through autonomous driving after completion of charging.

The current international standard ISO 23374-1 or ISO 12768-1 merely describes a method/apparatus for moving the ADS vehicle to the EV charging station immediately after the EV charging station is vacated in response to completion of charging of a previous EV when the AVPS or AVDS sends the ADS vehicle to the EV charging station. However, the current international standard fails to define a method/apparatus for sending the ADS vehicle to the EV charging station before completion of charging of the previous EV in consideration of a charging completion time of the previous EV. Therefore, the embodiments describe a method/apparatus for driving the ADS vehicle in advance before completion of charging of the EV in consideration of the charging completion time of the previous EV to achieve efficient and safe automated valet driving. Accordingly, the embodiments have an effect of increasing efficiency of a charging service provided by the EV charging station since a return time of the ADS vehicle may be advanced.

The embodiments related to a method of exchanging data with the EV charging station using the AVDS.

The embodiments relate to international standards ISO 23374-1 (AVPS) and ISO 12768-1 (AVDS). The embodiments relate to an automated valet parking system (hereinafter referred to as "AVPS") or an automated valet driving system (hereinafter referred to as "AVDS"). The embodiments provide a method and apparatus in which the ADS vehicle (used as the same concept as a standard "subject vehicle (SV)") is autonomously driven from a parking position to an EV charging station and charged with electricity and returns back to the parking position or is headed to another position through autonomous driving after completion of charging.

The current international standard ISO 23374-1 or ISO 12768-1 fails to define data exchanged between the AVPS or the AVDS and the EV charging station. Therefore, the embodiments provide data exchanged between the AVPS or the AVDS and the EV charging station to achieve efficient and safe automated valet driving. Hereinafter, a description will be given of data used for mutual communication between the AVDS and the EV charging station according to embodiments. As a result, the embodiments have an effect of providing an efficient communication data protocol between the AVDS and the EV charging station.

As described above, OB, OS, and VA may correspond to servers. In the description related to the following drawings, it is noted that the OB, OS, and VA may refer to or correspond to a server (or a global server), a local server, and an additional service server, respectively.

In addition, it is noted that UB and VB may refer to or correspond to a user terminal and a vehicle, respectively.

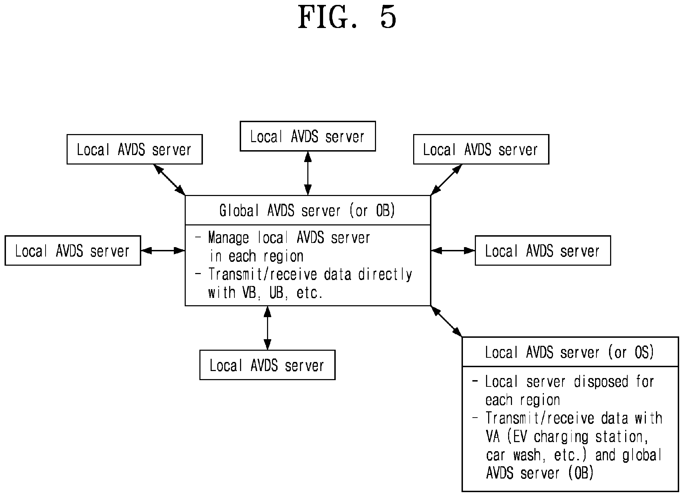

FIG. 5 illustrates a global AVDS server and/or a local AVDS server according to embodiments.

The AVDS of FIG. 1, the device of FIG. 2, the vehicle control device of FIG. 3, the vehicle of FIG. 4, and the like may control a vehicle in connection with the global AVDS server and the local AVDS server of FIG. 5.

The global AVDS server manages the local AVDS server in each region and performs a function of directly transmitting and receiving data with a Vehicle Backend (VB), a User Backend (UB), and the like. The global AVDS server may be referred to as an Operator Backend (OB). The global AVDS server may be connected to at least one local AVDS server, and may manage the local AVDS server(s).

The local AVDS server is a local server disposed by region, and may perform a function of transmitting and receiving data with a VA (e.g., EV charging station, car wash, etc.) and the global AVDS server (OB). The local AVDS server may be referred to as an Orchestrating System (OS).

A method of performing an AVDS mission of an SV by a global AVDS server while transmitting and receiving data with a local AVDS server will be described with reference to the following drawings.

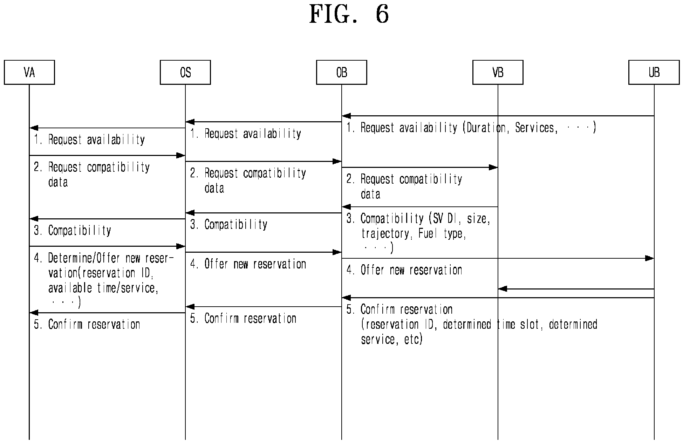

FIG. 6 illustrates an operation of an AVDS system related to an AVDS reservation according to embodiments.

An AVDS system related to an AVDS reservation is largely divided into five procedures, and signaling, message, and data classified in the same procedure are expressed by the same number. Each procedure is expressed as a step, and steps 1 to 5 shown in FIG. 6 will be described.

Regarding the step 1 of FIG. 6, an AVDS reservation method through AVDS access control of a vehicle by an AVDS server (OB) may include a step of requesting availability. For example, a UB may make a request for availability to an OB. The availability may include a parking duration, services desired to use, etc.

Such an availability request may be transmitted from the OB to an OS and from the OS to a VA. Depending on embodiments, the availability of the step 1 may be all the same.

Alternatively, the availabilities in the step 1 may be different in part at least according to embodiments. In this case, the availability transmitted from the OB to the OS or transmitted from the OS to the VA may further include additional information compared to the availability transmitted from the UB to the OB. For example, the availability transmitted from the OB to the OS may further include information on (i) ID of the UB and/or (ii) a timing point at which the OB has received the availability of the step 1.

Regarding the step 2 of FIG. 6, the AVDS reservation method through the AVDS access control of the vehicle by the AVDS server may include a step of requesting compatibility data. For example, the VA may request compatibility data from the OS. The compatibility data may be information on an ID, size, and/or fuel type of the vehicle. As such, the initial request for the compatibility data may be performed by the VA (value added system). A type of the information included in the compatibility data may vary according to the VA. For example, some VA may request information such as vehicle model information (manufacturer/year) and the like instead of the size and/or fuel type of the vehicle as the compatibility data.

Such a compatibility data request may be transmitted from the VA to the OS, from the OS to the OB, and from the OB to the VB. According to embodiments, the compatibility data request in the step 2 may be all the same.

Alternatively, according to embodiments, the compatibility data requests in the step 2 may be different in part at least. For example, the compatibility data request transmitted from the OB to the VB may include information on a VB ID, etc.

Regarding the step 3 of FIG. 6, the AVDS reservation method through AVDS access control of the vehicle by the AVDS server may include a step of receiving the compatibility data. For example, the OB may receive the compatibility data from the VB. The compatibility data may include information on an ID, a size, a fuel type, and/or the like of the vehicle.

Such compatibility data may be transmitted from the VB to the OB, from the OB to the OS, and from the OS to the VA.

Regarding the step 4 of FIG. 6, the AVDS reservation method through the AVDS access control of the vehicle by the AVDS server may include a step of determining transmitting, and receiving new reservation information. For example, the VA may determine new reservation information and propose a new reservation to the OS. The new reservation information may include at least one of a reservation ID, an available time slot, an available service (e.g., EV charging, car washing, etc.), and/or service cost. The new reservation information may vary depending on the VA. For example, a VA for an EV charging station may configure an available time slot in unit of one hour, and a VA for a car wash may configure a time slot that is available in unit of 30 minutes.

The new reservation information determined by the VA may be transmitted from the VA to the OS, from the OS to the OB, and from the OB to the UB. According to embodiments, the new reservation information in the step 4 may all be the same.

Alternatively, according to embodiments, the new reservation information in the step 4 may be different in part at least. For example, the new reservation information transmitted from the OS to the OB may include an ID of the OS, and the new reservation information transmitted from the OB to the UB may further include an ID of the UB.

Regarding the step 5 of FIG. 6, the AVDS reservation method through AVDS access control of the vehicle by the AVDS server may include a step of transmitting and receiving reservation confirmation information. For example, the UB may transmit reservation confirmation information to the OB and the UB may transmit reservation confirmation information to the VB. The reservation confirmation information may include at least one of a reservation ID, a determined time slot, and a determined service.

Also, it is shown in FIG. 6 that the VB does not receive new reservation information and merely receives the reservation confirmation information from the UB. Yet, it is not limited to the embodiment in which the VB does not receive the new reservation information. That is, the VB may also receive new contract information, and the VB and/or the UB may transmit reservation confirmation information to the OB. Also, the UB may transmit the reservation confirmation information to the OB only without transmitting the reservation confirmation information to the VB.

The reservation confirmation information transmitted by UB may be transmitted from the UB to the OB, from the OB to the OS, and from the OS to the VA.

The reservation confirmation information of the step 5 may be all the same according to embodiments.

Alternatively, the reservation confirmation information in the step 5 may be different in part at least according to embodiments. For example, the reservation confirmation information transmitted from the OB to the OS may include ID information of the OB.

The AVDS reservation is made according to the procedure illustrated in FIG. 6. The AVDS reservation is for an additional service (e.g., EV charging service or car wash service). In providing an automated valet driving service (e.g., valet parking), the AVDS reservation may provide a reservation for an additional service.

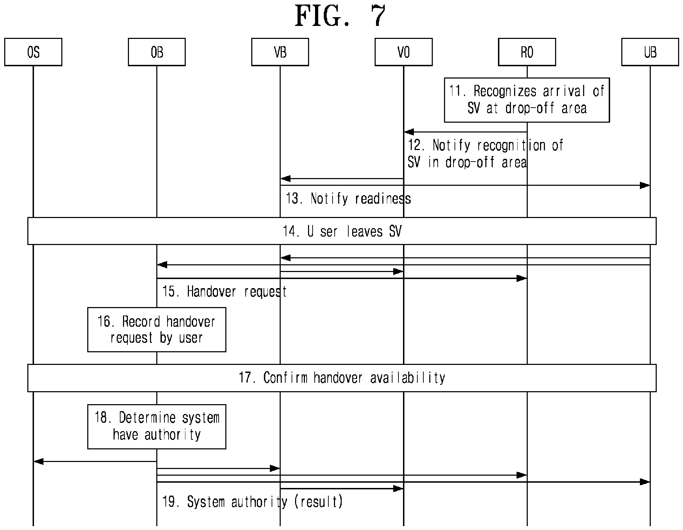

FIG. 7 illustrates an operation of an AVDS during an AVDS handover according to embodiments.

An AVDS handover may be performed by steps 11 to 19 of FIG. 7.

Regarding the step 11 of FIG. 7, an AVDS handover method may include a step of recognizing that an SV has arrived in a drop-off area by an RO. The RO may recognize that a vehicle (SV) has arrived in the drop-off area through a sensing module of the drop-off area, for example, a camera, an ultrasonic sensor, an infrared sensor, and/or the like.

Regarding the step 12 of FIG. 7, the AVDS handover method may further include a step of notifying whether the SV is recognized in the drop-off area from the RO to a VO. The RO may inform the SV that the SV has been recognized in the drop-off area.

Regarding the step 13 of FIG. 7, the AVDS handover method may further include a step of transmitting information informing that the handover is ready from the VO to a VB and/or from the VB to a UB. The VO may notify the VB that the AVDS handover is ready, and the VB may notify the UB that the AVDS handover is ready.

Regarding the step 14 of FIG. 7, the AVDS handover method may further include a step of enabling a user to leave the SV. The user may leave the SV that has arrived in the drop-off area.

Regarding the step 15 of FIG. 7, the AVDS handover method may further include a step of requesting a handover from the UB to the VB and/or an OB, from the OB to the RO, and from the VB to the VO. Having received the handover request input from a UF, the UB transmits the handover request to the VB and/or the OB. The OB transmits the handover request to the RO and the VB transmits the handover request to the VO.

Regarding the step 16 of FIG. 7, the AVDS handover method may further include a step of recording, by the OB, that there is a handover request from a user. The OB records that there has been the handover request from the user. If the handover fails once, a plurality of handover attempts may be recorded.

Regarding the step 17 of FIG. 7, the AVDS handover method may further include a step of checking whether handover availability is present. For example, it may be finally confirmed whether it is an environment in which the RO, the VO, and/or the like is able to perform an AVDS control operation. The environment in which the AVDS control operation may be performed may mean, for example, whether it is the environment in which an autonomous driving level 4 is supported.

Regarding the step 18 of FIG. 7, the AVDS handover method may further include a step of determining, by the OB, whether the AVDS system has an authority. The OB may determine that the AVDS system possesses the authority.

Regarding the step 19 of FIG. 7, in the AVDS handover method, the OB may notify the VB, RO, UB, and/or OS of the handover of the authority from the VB to the VO. It is notified that the control authority has been handed over to the AVDS system. For example, the OB determines a system authority and transmits the authority handover result to the VB, RO, UB and OS. Here, upon receiving the handover result, the RO starts remote control (autonomous parking) for the SV. The VB records the authority handover to the AVDS system. Upon receiving the handover result, the UB notifies a user of the authority handover. For example, it may notify the user of the authority handover by displaying it as UI/UX information on the UF.

Meanwhile, the step 16 and the step 18 may be performed by the OS instead of the OB.

In addition, regarding the step 15, a handover may be requested from the OB to the OS. Regarding the step 16, it may be recorded by the OS that there is a handover request from a user. Regarding the step 18, it may be determined by the OS whether the AVDS system has the authority.

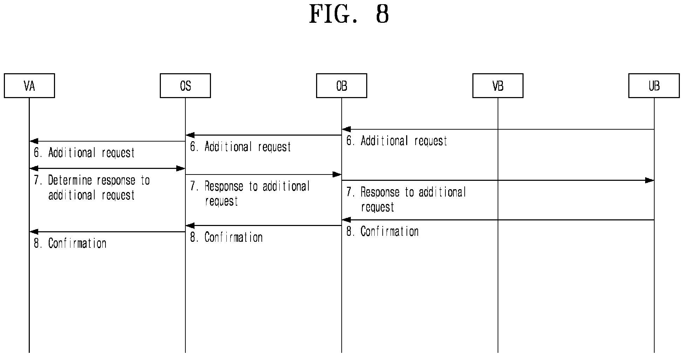

FIG. 8 illustrates a procedure for transmitting and receiving an additional request for an AVDS reservation or an AVDS service related to the AVDS reservation according to the present disclosure.

A procedure for transmitting and receiving an additional request for an AVDS reservation or an AVDS service related to the AVDS reservation is largely divided into three procedures. Signaling, messages, and data classified by the same procedure are denoted by the same number. Each procedure is expressed as a step, and steps 6 to 8 shown in FIG. 8 will be described.

Regarding the step 6 of FIG. 8, a method of making an additional request for an AVDS reservation or an AVDS service related to the AVDS reservation may include a step of transmitting an additional request. A UB may transmit an additional request to an OB.

The additional request may include information change or information addition included in reservation confirmation information, i.e., related to a pre-confirmed AVDS reservation, and/or information related to the information change or the information addition.

Alternatively, the additional request may include information change included in the reservation confirmation information, i.e., related to an AVDS service related to the pre-confirmed AVDS reservation, and/or information related to the information change.

Alternatively, the additional request may include information on an additional service. The information on the additional service may not be related to an AVDS reservation included in the reservation confirmation information, that is, the pre-confirmed AVDS reservation.

Alternatively, the additional request may include at least one of information change or information addition related to a pre-confirmed AVDS reservation, information change related to an AVDS service related to the pre-confirmed AVDS reservation, or information on an additional service.

Alternatively, the additional request may include at least one of: i) information change or information addition related to a pre-confirmed AVDS reservation and/or information related to the information change or the information addition, ii) information change related to an AVDS service related to the pre-confirmed AVDS reservation and/or information related to the information change, and iii) information on an additional service.

For example, data detail information on the additional request may be defined as the following table. Referring to Table 1, according to an additional request type, each additional request includes i) a case of information change or information addition related to a pre-confirmed AVDS reservation, ii) a case of information change related to an AVDS service related to the pre-confirmed AVDS reservation, and iii) a case for an additional service.

**Table 1**

| Additional Request | | | | |
|---|---|---|---|---|
| Data item | | | Range | Description |
| additional request type | | | 0. original reservation | 0. original reservation : mainly regarding parking information rather than service |
| | | | 1. original service | 1. original service : regarding the service reserved initially |
| | | | 2. additional service | 2. additional service : regarding the service to be added |
| 0 | original reservation | | 0. change the detail | 0. change : changing (parking) duration, parking spot (from sector A to sector B), parking location limitation, etc. |
| | | | 1. add the detail | |
| | | | 2. cancel the reservation | 1. add : adding duration, condition, etc. |
| | | | | 2. cancel : cancel the reservation |
| 0 | 0 | change the detail | 0. duration | 0. duration : binary code representing number. Time unit may be preconfigured. |
| | | | 1. parking location | |
| | | | | 1. parking location : ID of parking garage, parking sector or parking spot (to be changed) |
| 0 | 1 | add the detail | 0. duration | 0. duration : configure duration which was not requested on initial reservation |
| | | | 1. parking condition | 1. parking condition : indoor/outdoor, underground/ground/higher floor, etc. |
| 0 | 2 | cancel the reservation | - | cancel the reservation |
| 1 | original service | | 0. change the service | |
| | | | 1. change the detail of the service | 0. change : change the service from A (original service) to B |
| | | | 2. cancel the original service | 1. cancel : cancel the original service C |
| 1 | 0 | change the service | 0. EV charging | Chosen service may replace the original service. |
| | | | 1. Car wash | |
| 1 | 1 | change the detail of the service | 0. desire rate (or cost) | Determine the detail of the service (service B (refer to top of the row)) |
| | | | 1. desire time to be performed | |
| | | | 2. SOC (EV charging case) | |
| | | | 3. washing type (wash case) | |
| 1 | 2 | cancel the original service | - | Cancel the original service |
| 2 | additional service | | 0. EV charging | 0. EV charging : desire time, desire SOC, desire charging rate, prefer charging type, etc. |
| | | | 1. Car wash | 1. Car wash : desire time, prefer washing type, desire cost, etc. |
| 2 | 0 | EV charging | 0. Desire time | 0. Desire time : date and time information may be signalled by using binary code |
| | | | 1. Desire SOC | 1. Desire SOC : number representing % may be signalled by using binary code |
| | | | 2. Desire charging rate | |
| | | | | 2. Desire charging rate : ex. rate per 1kWh |
| | | | 3. Prefer charging type | 3. Prefer charging type : each type may be indicated by predetermined binary code |
| | | | | ex. AC 5-pin : 0010010 (2), combo 5-pin : 0011011 (2) |
| 2 | 1 | Car wash | 0. Desire time | 0. Desire time : date and time information may be signalled by using binary code |
| | | | | 1. Prefer washing type : each type may be indicated by predetermined binary code |
| | | | 1. Prefer washing type | |
| | | | | ex. machine - car still : 0010010 (2), machine - car moving : 0011011 (2) hand wash: 1011010 (2) |
| | | | 2. Desire cost | |
| | | | | 2. Desire cost: - |

Referring to Table 1, an additional request may indicate at least one of an AVDS reservation, an AVDS service related to the AVDS reservation, or an additional service, which are included in reservation confirmation information (a pre-confirmed AVDS reservation or an AVDS service related thereto). That is, a value of an additional request type may indicate an AVDS reservation, an AVDS service, or an additional service.

Additionally, if an additional request indicates a pre-confirmed AVDS reservation (an AVDS reservation included in the reservation confirmation information), it may indicate a request for a change or addition of the details of the AVDS reservation or a cancellation of the AVDS reservation.

In addition, if an additional request indicates an AVDS service (an AVDS service included in the reservation confirmation information) of a pre-confirmed AVDS reservation, it may indicate a request for a change of the AVDS service, a change of details of the AVDS service, or a cancellation of the AVDS service.

In addition, if an additional request indicates an additional service, it may indicate an additional service and details about the additional services (e.g., service time information, service type, service charge, etc.).

Such additional requests may be delivered from the UB to the OB, from the OB to the OS, and from the OS to the VA.

According to embodiments, the additional requests in the step 6 may be all the same.

Alternatively, according to embodiments, the additional requests in the step 6 may be different in part at least. In this case, the additional request transmitted from the OB to the OS or transmitted from the OS to the VA may further include additional information compared to the additional request transmitted from the UB to the OB. For example, the additional request transmitted from the OB to the OS may further include information about (i) the ID of the UB and/or (ii) a timing point at which the OB receives the additional information from the UB.

Regarding the step 7 of FIG. 8, the method of making the additional request for the AVDS reservation or the AVDS service related to the AVDS reservation may include a step of determining a response to the additional request and transmitting and receiving the determined response. The VA or the OS may determine a response to a received additional request.

The response to the additional request may include different information depending on the additional request.

For example, the response to the additional request may include at least one of an AVDS reservation ID, AVDS reservation change information, AVDS reservation additional information, or AVDS reservation cancellation information.

For another example, the response to the additional request may include at least one of an AVDS reservation ID, information on a changed AVDS service related to the AVDS reservation, changed information on the AVDS service related to the AVDS reservation (e.g., service cost, service execution time (e.g., available time slot), charging state, car wash type, etc.), or cancellation information of the AVDS service.

For another example, the response to the additional request includes information on an additional service, and may include specific information on the additional service (for example, in the case of an EV charging service, at least one of a charging time, a charging state, a charging speed, and a charging type). In the case of a car wash service, at least one of a car wash time, a car wash type, and a car wash cost may be included.

Meanwhile, the response to the additional request may be configured to include information indicating acceptance or rejection of the additional request.

Regarding the step 8 of FIG. 8, the method of making the additional request for the AVDS reservation or the AVDS service related to the AVDS reservation may a step of transmitting and receiving additional request confirmation information in response to the additional request. The UB may determine additional request confirmation information in response to a response to a received additional request.

The additional request determination information may include at least one of a reservation ID, time information related to a reservation or service, and a determined service.

Alternatively, the additional request confirmation information may include information composed of information included in a response to the received additional request. That is, the response to the additional request may include information related to information change/addition of an AVDS reservation determined based on the additional request in the step 6, information change/addition of an AVDS service, or information related to an additional service. Accordingly, the additional request confirmation information provided in response to the response to the additional request may include information included in the response to the additional request or a portion thereof.

The additional request confirmation information transmitted by UB may be transmitted from the UB to the OB, from the OB to the OS, and from the OS to the VA.

According to embodiments, the additional request confirmation information in the step 8 may all be the same.

Alternatively, according to embodiments, the additional request confirmation information in the step 8 may be different in part at least. For example, the additional request confirmation information transmitted from the OB to the OS may include ID information of the OB.

Meanwhile, the step 6 of FIG. 8 may be performed after reservation confirmation (the step 5 of FIG. 6) is completed in connection with the procedure of FIG. 5. In addition, the step 6 of FIG. 8 may be performed after the authority for the vehicle (SV) is handed over to the AVDS or the AVDS server (OB) in connection with the procedure of FIG. 7. That is, the procedure of FIG. 8 may be performed in conjunction with the procedure of FIG. 6 or FIG. 7.

In addition, after the handover is completed, a pickup time, which is a time for sending the vehicle (SV) to a user after completion of the Automated Valet Driving (AVD) and AVDS reservation and the AVDS service and transferring the authority for the vehicle (SV) back to the user, may be determined. In this case, the additional request may be transmitted before the pickup time.

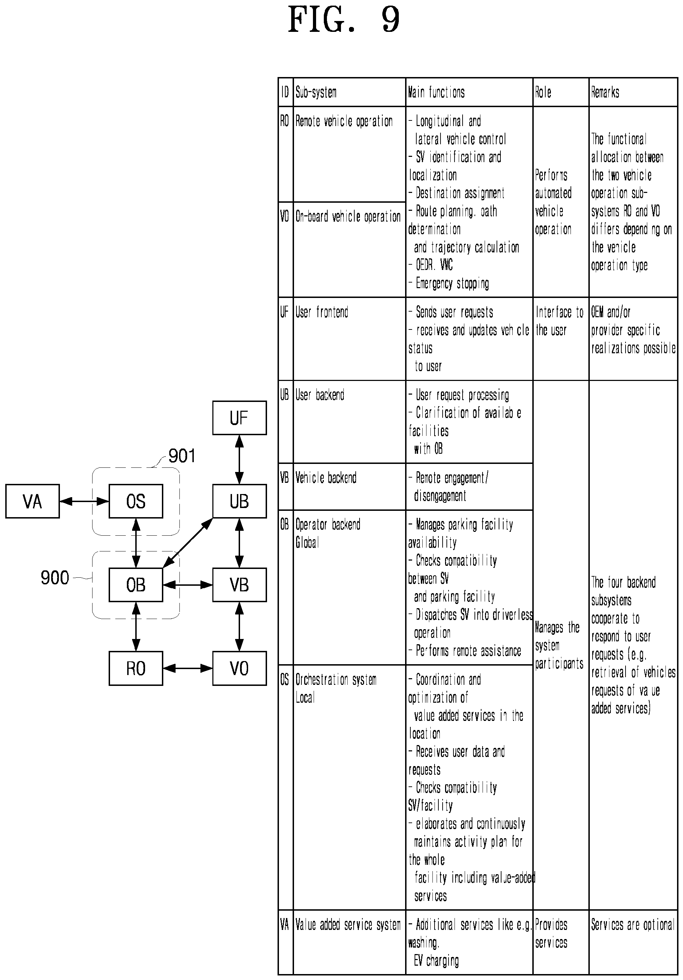

FIG. 9 illustrates a configuration and function of a system of an AVDS server according to embodiments.

FIG. 9 shows main functions of an AVDS for each subsystem of a system of an AVDS server.

An RO (Remote vehicle Operation) has an autonomous vehicle control role. Specifically, with respect to steering, movement, and vehicle dynamics, the RO has functions such as SV identification, destination assignment, route planning, OEDR, SV localization, path determination, trajectory calculation, vehicle motion control, emergency stop, and the like.

Like the RO, a VO (on-board Vehicle Operation) has the same role and functions. The function assignment between the RO and the VO subsystems may vary depending on a vehicle operation type.

A UF (User Frontend) serves as a user interface. Specifically, it has a user request transmitting function and a function of receiving and updating a vehicle state from a user. The UF function may vary depending on the specifications of a provider.

UB (User Backend), VB (Vehicle Backend), OB (Operator Backend), OS (Orchestrating System), and PM (automated valet driving Premises Management) manage a system.

The UB (User Backend) handles user requests.

The VB (Vehicle Backend) has remote participation and/or release functions.

The OB (Operator Backend) 900 has functions related to managing parking facility availability, checking SV and parking facility compatibility, controlling SV as unmanned driving, performing remote support, etc.

The OS (Orchestrating System) 901 has the function of coordinating and optimizing a service task at a corresponding location and coordinating various services using automated functions.

The PM (automated valet driving Premises Management) has the function of managing environmental conditions and responding to the incapacitation of an operating function.

Backend subsystems such as UB (User Backend), VB (Vehicle Backend), and OB (Operator Backend) work together to respond to user requests (e.g., vehicle search).

The PM (automated valet driving Premises Management) coordinates automatic driving activities in a facility area.

The VA (Value Added service system) has an additional service role. The VA has functions such as additional services (e.g., washing and charging). These services may be optional.

The OB corresponds to a (global) AVDS server, and the OS corresponds to a local AVDS server.

In addition, the UF or UB may correspond to a device or terminal on a user side.

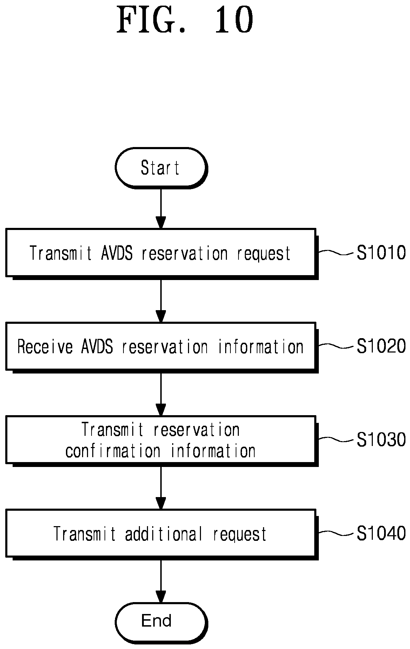

FIG. 10 illustrates a flowchart of a method for transmitting an additional request for an AVDS reservation or a service related to the AVDS reservation according to the present disclosure. The flowchart of FIG. 10 may be performed by the device 3000 of FIG. 3. The device 3000 may be configured to perform an operation according to the flowchart of FIG. 10 in a state in which the AVDS reservation and the AVDS handover described with reference to FIG. 6 or 7 are performed. In addition, contents not described with reference to FIG. 10 may refer to the description of FIG. 8.

The device 3000 includes an interface unit 3001, a processor 3002, and a memory 3003, and the interface unit 3001 may include a wired/wireless transceiver.

The device 3000 may transmit an AVDS reservation request to a server (S810). The AVDS reservation request may correspond to the availability request of FIG. 6. The server may include an OB, but may include an OS, VA, etc. as well as an OB to which the AVDS reservation request is directly transmitted.

The device 3000 may receive AVDS reservation information determined based on the AVDS reservation request (S820). The AVDS reservation information may correspond to the new reservation information of FIG. 5.

The device 3000 may transmit reservation confirmation information on the AVDS reservation information to the server (S830).

Thereafter, the device 3000 may transmit an additional request related to the AVDS reservation request to the server (S840).

Through the procedure illustrated in FIG. 10, the device 3000 may additionally perform: addition, change, or cancellation for a pre-confirmed AVDS reservation; addition, change, or cancellation for a service of an AVDS reservation; a request for an additional service; and/or the like, thereby bringing a technical effect of providing more user convenience, such as user's time saving, energy consumption reduction, and the like, expected through AVDS.

Meanwhile, a device for transmitting an additional request for an AVDS reservation or a service related to the AVDS reservation will be described with reference to FIG. 3.

The device 3000 may include a transceiver 3001 and a processor 3002 that controls the transceiver 3001 to transmit or receive information about an AVDS reservation.

The processor 3002 may control the transceiver 3001 to transmit an AVDS reservation request to a server. Furthermore, the processor 3002 may control the transceiver 3001 to receive AVDS reservation information determined based on the AVDS reservation request. Furthermore, the processor 3002 may control the transceiver 3001 to transmit reservation confirmation information for the AVDS reservation information. The processor 3002 may control the transceiver 3001 to transmit an additional request related to the AVDS reservation request to the server.

Meanwhile, the additional request may be transmitted to the server and then sequentially transmitted to a local server and an additional service providing server that provides an additional service related to a service indicated by the additional request.

The processor 3002 may control a handover request, which is for handover of an authority for a vehicle to the AVDS, to be transmitted to the server. Thus, the additional request may be configured to be transmitted to the server after the authority for the vehicle is handed over to the AVDS. Also, the additional request may be transmitted before a pickup time after a service according to the AVDS reservation is completed.

The processor 3002 may receive a response to the additional request, and the response to the additional request may be determined by the local server.

The additional request may include at least one of: changing or adding information related to an AVDS reservation included in the reservation confirmation information; changing information related to a service of the AVDS reservation included in the reservation confirmation information; or information on an additional service.

Alternatively, the additional request may be configured to change a service of the AVDS reservation included in the reservation confirmation information.

In another aspect, the additional request may indicate at least one of an AVDS reservation included in the reservation confirmation information, a service of the AVDS reservation included in the reservation confirmation information, or an additional service.

The additional request may indicate a request for changing or adding details of an AVDS reservation included in the reservation confirmation information or for cancellation of the AVDS reservation included in the reservation confirmation information.

The additional request may indicate a request for changing a service of an AVDS reservation included in the reservation confirmation information, changing details of a service of the AVDS reservation included in the reservation confirmation information, or cancelling the service of the AVDS reservation included in the reservation confirmation information.

The additional request may indicate the additional service and details of the additional service.

Meanwhile, according to another embodiment of the present disclosure, proposed is a vehicle (not shown) including the above-described device for transmitting the above-described AVDS reservation or the additional request for a service related to the AVDS reservation. The vehicle may include the device 3000 including the transceiver 3001 and the processor 3002 that controls the transceiver 3001 to transmit or receive information about an AVDS reservation. The description of the device 3000 may refer to the foregoing description.

In the present specification, a "device" or a "server" that transmits/receives and processes AVDS reservation related information and the like or a configuration included therein is described as performing an operation. Yet, the "device", "server" and components belonging thereto are just names and the scope of rights is not subordinate to them.

In other words, the proposed technology may be performed with a name other than the device, and the method, scheme and the like described above may be performed by software for vehicle control or by computer-, machine-, or device-readable codes therefor.

In addition, as another aspect of the present disclosure, the operation of the proposed technology described above may be provided as a code that can be implemented, embodied, or executed by a "computer" (a comprehensive concept including a System-on-Chip (SoC), a (micro-) processor, etc.), a computer-readable storage medium or computer program product that stores or includes the code, and the like. The scope of rights of the present disclosure may extend to the code or computer-readable storage medium or computer program product storing or including the code.

Various embodiments of the present disclosure do not list all available combinations but are for describing a representative aspect of the present disclosure, and descriptions of various embodiments may be applied independently or may be applied through a combination of two or more.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. An apparatus, the apparatus comprising:
a transceiver;
one or more processors configured to execute instructions and to control the transceiver to transmit or receive information on an Automated Valet Driving System (AVDS) reservation; and
a memory storing the instructions, wherein execution of the instructions configures the one or more processors to:
transmit, by the transceiver, an AVDS reservation request to a server;
receive AVDS reservation information from the server, the AVDS reservation information being determined based on the AVDS reservation request;
transmit reservation confirmation information for the AVDS reservation information to the server; and
transmit an additional request related to the AVDS reservation request to the server.

2. The apparatus of claim 1, wherein the transmitting the additional request further comprises:
sequentially transmitting the additional request to a local server and an additional server providing an additional service, the additional service being a service indicated by the additional request after being transmitted to the server.

3. The apparatus of claim 2, wherein a response to the additional request is determined by the local server.

4. The apparatus of any one of claims 1 to 3, wherein the processor is further configured to:
control a handover request to be transmitted to the server to hand over a control authority of a vehicle associated with the AVDS to the AVDS.

5. The apparatus of claim 4, wherein the additional request is transmitted to the server after a control authority for the vehicle is handed over to the AVDS.

6. The apparatus of claim 1, wherein the additional request is transmitted before a pickup time after a service according to the AVDS reservation being completed.

7. The apparatus of any one of claims 1 to 6, wherein the additional request includes one or more of:
a change or an addition of information related to the AVDS reservation included in the reservation confirmation information;
a change of information related to a service of the AVDS reservation included in the reservation confirmation information; and
information on an additional service.

8. The apparatus of any one of claims 1 to 7, wherein the additional request is configured to indicate a change of a service of the AVDS reservation included in the reservation confirmation information.

9. The apparatus of any one of claims 1 to 8, wherein the additional request indicates one or more of:
the AVDS reservation included in the reservation confirmation information;
a service of the AVDS reservation included in the reservation confirmation information; and
an additional service.

10. The apparatus of claim 9, wherein the additional request indicates one of:
a request for a change or an addition of details of the AVDS reservation included in the reservation confirmation information; and
a cancellation of the AVDS reservation included in the reservation confirmation information.

11. The apparatus of claim 9, wherein the additional request indicates one or more of:
a request for a change of the service of the AVDS reservation included in the reservation confirmation information;
a change of details of the service of the AVDS reservation included in the reservation confirmation information; and
a cancellation of the service of the AVDS reservation included in the reservation confirmation information.

12. The apparatus of claim 9, wherein the additional request indicates the additional service and details for the additional service.

13. A processor-implemented method, the method comprising:
transmitting an Automated Valet Driving System (AVDS) reservation request to a server;
receiving AVDS reservation information determined based on the AVDS reservation request;
transmitting reservation confirmation information for the AVDS reservation information to the server; and
transmitting an additional request related to the AVDS reservation request to the server.

14. The method of claim 13, wherein the additional request comprises one or more of:
a change or addition of information related to the AVDS reservation included in the reservation confirmation information;
a change of information related to a service of the AVDS reservation included in the reservation confirmation information; and
information on an additional service.

15. The method of claim 13 or 14, wherein the additional request is configured to indicate a change of a service of the AVDS reservation included in the reservation confirmation information.
